Europäisches Patentamt

European Patent Office

Office européen des brevets

(11) Numéro de publication: **0 267 818 B1**

# FASCICULE DE BREVET EUROPEEN

(45) Date de publication de fascicule du brevet:
03.04.91

(51) Int. Cl.⁵: **F16L 11/08**

(21) Numéro de dépôt: **87402204.9**

(22) Date de dépôt: **05.10.87**

(54) **Tuyau composite souple pour fluide sous pression.**

(30) Priorité: **10.10.86 FR 8614104**

(43) Date de publication de la demande:
**18.05.88 Bulletin 88/20**

(45) Mention de la délivrance du brevet:
**03.04.91 Bulletin 91/14**

(84) Etats contractants désignés:
**BE DE ES GB IT LU NL SE**

(56) Documents cités:
**EP-A- 0 192 922**
**DE-A- 2 625 900**
**FR-A- 2 475 185**
**US-A- 3 905 398**

(73) Titulaire: **HUTCHINSON**
**2 rue Balzac**
**F-75008 Paris(FR)**

(72) Inventeur: **Blin, Philippe**
**Les Macquinières**
**F-37260 Monts(FR)**

(74) Mandataire: **Orès, Bernard et al**
**Cabinet ORES 6, Avenue de Messine**
**F-75008 Paris(FR)**

## Description

L'invention a pour objet un tuyau composite souple pour le transport de fluide sous pression comprenant un tube intérieur en un élastomère vulcanisable ou thermoplastique et au moins une couche d'armature en fibres textiles synthétiques du type aramide avec un revêtement protecteur externe.

On connaît déjà de nombreuses réalisations de tuyaux souples pour le transport de fluide sous pression comportant un tube intérieur en matériau polymère, par exemple en un élastomère vulcanisable auquel est associée une couche de fibres textiles de renforcement, naturelles comme du coton, ou artificielles comme des rayonnes ou synthétiques comme des nylons aliphatiques, et un revêtement extérieur en le même élastomère que celui du tube, ou en un élastomère différent pour former un ensemble présentant, notamment, de bonnes qualités mécaniques et de résistance à la pression du fluide à transporter. Lorsque cette dernière devient très importante, un tuyau souple à fibres textiles tel que défini ci-dessus, ne peut pas satisfaire aux conditions imposées, notamment de résistance, sans l'adjonction d'autres couches de fibres textiles disposées entre le tube intérieur et le revêtement externe avec, entre les couches, de minces ou très minces feuilles d'élastomère quelquefois appelées entreplis. L'augmentation du nombre de couches accroît, bien entendu, les dimensions du tuyau de même que son poids et son coût tout en diminuant fréquemment sa souplesse ou flexibilité comme mesurée, par exemple, par le rayon de courbure minimal pouvant être imposé au tuyau.

Aussi a-t-on proposé, pour le transport de fluide à moyenne ou haute pression, au sens donné à ces termes dans le domaine des tuyaux hydrauliques, des tuyaux composites souples faisant application en lieu et place des fibres textiles usuelles, de fibres synthétiques en polyamides aromatiques, également connues sous le nom de fibres ou filaments du type "aramide" et dont un exemple est constitué par celles vendues par la Société DUPONT DE NEMOURS sous la Marque déposée "KEVLAR". L'application de telles fibres dont les caractéristiques de résistance sont plus grandes que celles des fibres usuelles du type rayonne, polyester ou polyamide, à la fabrication de tuyaux souples peut être trouvée, par exemple, dans US-A 4 289 555, dans EP-A-0 024 512, EP-A-0 074 747 ou encore dans DE-A-2 625 900.

Dans le premier de ces documents est décrit un procédé de fabrication d'un tuyau composite comprenant un tube intérieur en matière plastique et non en élastomère sur lequel est appliquée une tresse en fibres aramide qui est recouverte d'un film tubulaire imperméable à l'humidité destiné a s'opposer à la grande affinité de la fibre aramide pour l'eau, et également à la formation de bulles ou espaces vides entre ladite couche tressée et la couche externe de protection, elle aussi en matière plastique, lesdites bulles étant la source d'hétérogénéités défavorables.

Dans le second des documents cités, qui vise lui aussi un tuyau à tube intérieur en matériau synthétique polymère thermoplastique on prévoit d'augmenter la résistance à la flexion et aux pulsations de pression en associant au tube une pluralité de couches de fibres aramide enroulées en hélice, tressées, lesdites fibres ayant subi un retordage ou étant assemblées suivant des câblés particuliers, tandis que dans le troisième des documents mentionnés on prévoit, complémentairement aux couches de fibres aramide à enroulement en hélice ou en tresses, d'utiliser au moins un fil métallique lui-même sous forme de tresse ou d'enroulement hélicoïdal.

Dans le dernier des documents cités est décrit un tuyau composite comprenant un tube intérieur en caoutchouc naturel ou synthétique et des renforts constitués par un tissu en fil d'aramide d'une part et deux couches de monofilaments pour conférer au tuyau les propriétés de résistance à la pression et à la dépression, comme requis par exemple pour le transport de pétrole.

Ces réalisations connues, si elles donnent satisfaction, n'en présentent pas moins des inconvénients, en particulier d'être à structure relativement complexe, donc de poids élevé, de fabrication onéreuse, d'encombrement important et, de ce fait, impropres à être utilisées pour des applications dans lesquelles on souhaite transporter un fluide à moyenne ou haute pression mais avec un tuyau de faible encombrement, dont le poids ne soit par excessif et qui puisse, en outre, être associé à des dispositifs de raccords usuels, comme ceux mis en oeuvre dans le domaine des machines-outils ou analogues.

C'est par conséquent, un but de l'invention de fournir un tuyau composite souple pour l'acheminement de fluide à moyenne et haute pression dont le dimensionnement soit comparable à celui des mêmes tuyaux mais prévus pour l'acheminement de fluide à basse pression, de sorte qu'il en résulte simultanément un plus faible coût, un plus faible poids, un gain de volume et une plus grande facilité de mise en oeuvre, notamment eu égard à son positionnement en service.

C'est, encore, un but de l'invention de fournir un tel tuyau composite souple qui comprend un tube intérieur en élastomère et un revêtement externe également en élastomère identique ou différent de celui du tube et qui puisse être fabriqué par les techniques usuelles de réalisation des tuyaux composites connus à tresses ou nappes guipées.

C'est aussi, un but de l'invention de fournir un tel tuyau composite présentant des caractéristiques améliorées de tenue aux attaques chimiques, mais aussi aux températures haute et/ou basse auxquelles il peut être soumis.

C'est, à cet égard, un but de l'invention de fournir un tel tuyau présentant de bonnes caractéristiques d'isolation thermique et qui, ainsi, peut trouver application dans les domaines à environnement particulièrement agressif, tout en étant, toutefois, de dimensions plus faibles que celles des tuyaux précédemment mis en oeuvre dans de tels environnements.

Un tuyau composite souple pour le transport de fluide sous pression comprenant un tube intérieur en un élastomère vulcanisable ou thermoplastique et au moins une couche d'armature en fibres textiles synthétiques du type aramide avec un revêtement protecteur externe est caractérisé, selon l'invention, en ce que ladite armature est une tresse, ou l'équivalent d'une tresse sous forme de deux nappes guipées, réalisée en un fil d'une ténacité comprise entre 2400 et 3000 N/mm² et qui représente entre 3 et 20% de l'épaisseur totale du tuyau lequel présente une pression limite de non éclatement (PLNE) d'au moins 50 MPa pour un diamètre nominal de 6,4 mm et de 20 MPa pour un diamètre nominal de 25 mm.

On obtient ainsi, de manière surprenante, un tuyau qui, de dimensions tout à fait semblables sinon identiques ou inférieures à celles d'un tuyau "basse pression" est approprié pour l'acheminement d'un fluide dans des conditions qui sont celles répertoriées dans la pratique pour les tuyaux "haute pression".

Un tel tuyau a un coût qui est notablement inférieur à celui des tuyaux à plusieurs couches généralement utilisés en "haute pression" tout en étant seulement de peu supérieur à celui des tuyaux "basse pression" ; il est ainsi particulièrement bien approprié pour être mis en oeuvre dans toutes les gammes de pression généralement rencontrées dans les domaines d'exploitation de ces tuyaux souples à base d'élastomère vulcanisable ou thermoplastique et à armature en fibres textiles.

Dans une réalisation préférée d'un tuyau selon l'invention, faisant application d'une tresse ou de l'équivalent étant entendu ici au sens de nombre de fils mis or oeuvre pour former deux nappes ou une tresse constituant une couche d'armature) en fibres du type aramide, telles que celles vendues par la Société DUPONT DE NEMOURS sous la marque KEVLAR, l'adhérence de la couche d'armature par rapport au tube central et au revêtement extérieur est d'au moins 25 N/cm, comme mesuré par la méthode de pelage usuelle.

Le tube inférieur au contact du produit à véhiculer sous pression est choisi en fonction des caractéristiques physico-chimiques dudit produit, notamment pour résister à l'attaque chimique et pour conserver de bonnes caractéristiques aux conditions d'utilisation envisagées, notamment de température, de pression, de courbure et de fatigue.

Pour satisfaire à ces conditions, le tube est avantageusement fabriqué à partir d'un élastomère du type des caoutchoucs nitrile (NBR) ou polychloroprène (CR).

De façon analogue, le revêtement externe est en un élastomère présentant de bonnes qualités de résistance à l'environnement, en particulier aux environnements agressifs et peut être avantageusement réalisé par exemple, en polychloroprène (CR) ou EPDM.

La mise en oeuvre, selon l'invention, d'une armature en fibres du type aramide, rend possible sans augmentation de dimensions et/ou de coût l'utilisation soit d'un tube, soit d'un revêtement à bonnes ou très bonnes qualités de résistance à l'environnement, par exemple en un élastomère du type des caoutchoucs d'épichlorhydrine (ECO) ou des fluoroélastomères (FKM) ou des polyéthylènes chlorosulfonés (CSM) ou des polyéthylènes chlorés (CM), pour la confection de tuyaux susceptibles d'être utilisés dans des enceintes à haute ou très haute température, comme des fours ou analogues, lesdits tuyaux étant, le cas échéant, munis d'une protection supplémentaire sous forme d'une gaine céramique ou en fibres de verre ou analogue.

Selon l'invention, également, on propose une réalisation particulièrement préférée d'un tuyau composite souple pour transport de fluide sous pression suivant laquelle on rapporte sur la couche en fibres aramide, entre celle-ci et le revêtement externe, un enroulement hélicoïdal d'un fil, de préférence métallique.

Dans une telle réalisation, en outre, une mince ou très mince couche de fibres textiles servant d'entreplis est interposée entre l'enroulement hélicoïdal et le revêtement externe.

Une telle structure permet d'encore diminuer les rayons de courbure du tuyau composite tout en s'opposant à son écrasement.

Dans une telle réalisation, en outre, la pression limite de non éclatement (PLNE) est encore accrue.

L'invention sera bien comprise par la description qui suit, faite à titre d'exemple et en référence au dessin annexé dans lequel :

- la figure 1 est une vue en élévation, avec arrachements,illustrant les couches successives, d'un tuyau composite souple suivant l'invention ;

- la figure 2 est une vue en coupe, selon la ligne 2-2 de la figure 1 ;

- la figure 3 est une vue analogue à celle de la figure 1 mais pour une autre réalisation.

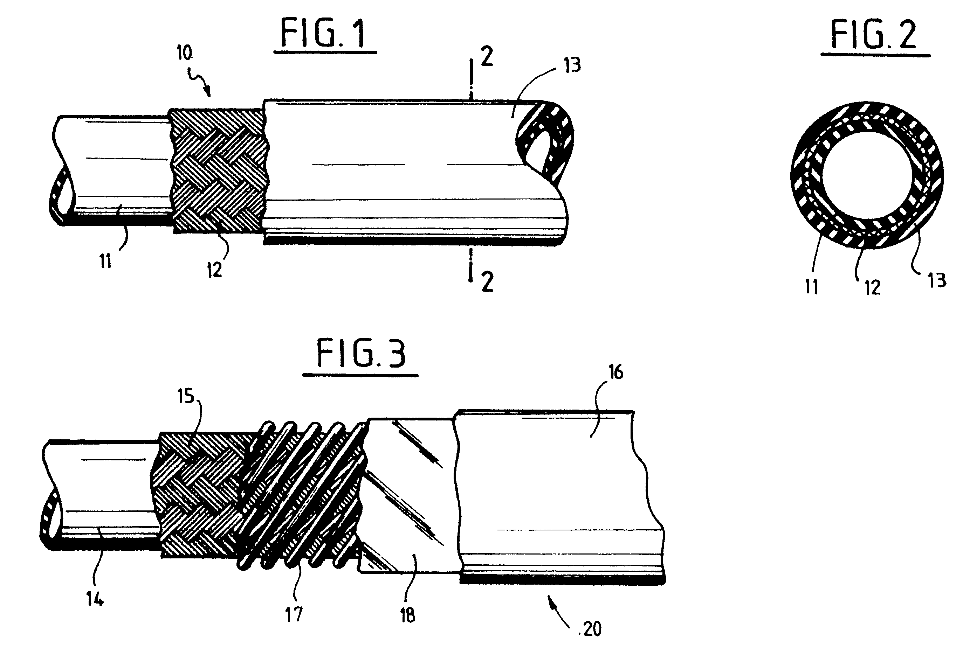

On se réfère d'abord aux figures 1 et 2. Un tuyau composite souple selon l'invention, 10, comprend un tube 11 et un élastomère vulcanisable ou thermoplastique sur lequel est disposée une tresse 12 en fibres ou filaments du type "aramide" sur laquelle est rapporté un revêtement externe 13, également en élastomère vulcanisable ou thermoplastique, de même nature ou de nature différente de celui du tube 11.

Dans un mode de réalisation, le tube 11 est extrudé en un élastomère du type nitrile et sur celui-ci est rapportée la tresse 12 à l'aide d'une machine usuelle de tressage, en présentant de préférence les fils de tresse à l'angle neutre de 54° 44'. Après extrusion sur la tresse 12 d'un revêtement 13, avantageusement avec mise en oeuvre d'un moyen d'adhérisation sur les fibres ou filaments constitutifs de la tresse, l'ensemble composite homogène est vulcanisé à une pression de l'ordre de 4 bars et à une température de l'ordre de 150° C.

On obtient ainsi un tuyau composite souple dont l'armature en fibres ou filaments du type aramide, plus fins mais cependant nettement plus tenaces que les fibres textiles usuelles, permet de satisfaire, sous un encombrement et avec des dimensions qui sont ceux des tuyaux hydrauliques textiles à une seule couche d'armature (tuyaux basse pression) aux conditions et exigences des utilisateurs pour les tuyaux composites hydrauliques textiles à plusieurs couches d'armature (tuyaux haute pression).

Dans une variante, non représentée, on remplace la tresse 12 par deux nappes de fils de type aramide dis posés symétriquement par rapport à un plan perpendiculaire à l'axe du tuyau et qui font un angle compris entre 50 et 58° par rapport à l'axe.

La tresse ou les fils constitutifs des nappes peuvent être des fils unitaires ou des fils toronés sous forme de câblés.

Conformément à l'invention, le tube 11 et le revêtement 13 sont choisis en un matériau du type élastomère et de manière que la somme de leurs épaisseurs de parois soit comprise entre 80 et 97% de l'épaisseur de paroi totale.

Avec une telle structure, le tuyau composite présente une pression limite de non éclatement (PLNE) supérieure à 25 MPa pour un diamètre nominal du tuyau de 19 mm.

Sa résistance aux impulsions de flexion appliquées à une fréquence de 1 Hz est d'au moins 100.000 impulsions sous une pression de 93 bars, une température de 93° C et une courbure de 180°, c'est-à-dire avec le tuyau replié en U sur lui-même.

Un rayon de courbure minimal de 130 mm peut être imparti au tuyau sans diminution de ses qualités.

Un tuyau composite suivant l'invention est également dépourvu des défauts de non adhérence que l'on rencontre parfois sur des tuyaux usuels, comme montré par les essais qui ont révélé des caractéristiques d'adhérence de 25 N/cm lorsque la tresse 12 est en fibres ou filaments aramide d'une ténacité de 2760 N/mm².

Un tuyau composite selon l'invention, qui trouve application pour l'acheminement de fluide à "haute pression", mais avec des caractéristiques dimensionnelles des tuyaux "basse pression", est particulièrement bien approprié pour son utilisation dans des domaines à environnement agressif, par exemple du type de ceux que l'on rencontre dans les fours (contraintes thermiques) ou les milieux à atmosphère abrasive.

Example .

Un tuyau composite d'un diamètre intérieur de 19mm et d'une épaisseur de paroi totale de 3,75 mm a été fabriqué à partir d'un tube à base de caoutchouc nitrile d'une épaisseur de 2 mm revêtu d'une tresse en fibres aramide d'un titre de 1670 dtex du type KEVLAR (marque déposée de la Société DUPONT DE NEMOURS) et mise en place à l'aide d'une tresseuse à 36 fuseaux de 3 fils par fuseau. La tresse est ensuite garnie d'un revêtement en polychloroprène d'une épaisseur de 1,5 mm avec interposition entre les constituants du tuyau des moyens d'adhérisation usuels.

Les essais conduits sur un tel tuyau ont donné les résultats ci-aprés :

Adhérence (N/cm) : 25

Variation de longueur sous une pression de 110 bars : rétrécissement de 0,8 %

Pression d'éclatement : 28 MPa

Poids : 386 g/m

Variation de diamètre en % (sous 110 bars) :2,6%

Torsion : nulle

Rayon de courbure minimal (mesure conforme aux normes en vigueur) : 135 mm.

On se réfère maintenant à la figure 3 relative à une autre forme de réalisation. Dans celle-ci le tuyau comporte un tube central 14 analogue au tube 11 de la réalisation précédente, une tresse 15 analogue à la tresse 12, et un revêtement extérieur 16 analogue au revêtement 13. Dans cette réalisation, toutefois, on prévoit de disposer sur la tresse 15 un enroulement hélicoïdal d'un fil 17, de préférence métallique, avec interposition entre lui et le revêtement 16 d'une mince ou très mince couche 18 en fibres textiles, par exemple en rayonne ou analogue. Le tuyau composite 20 présente non seulement d'aussi bonnes caractéristiques que celles du tuyau de mêmes dimensions et en les mêmes matériaux que celui selon les figures 1 et 2 mais, en outre, il permet d'obtenir des rayons de courbure extrêmement faibles sans diminution de la section de passage du tube 14, d'une part et, d'autre part, une excellente tenue à des aspirations éventuelles, de sorte que ses possibilités d'utilisation en sont encore accrues.

Le gain d'épaisseur obtenu sur les parois constitutives du tube et du revêtement, à caractéristiques d'utilisation égales, par un tuyau selon l'invention par rapport aux tuyaux co nnus, permet en outre de mettre en oeuvre soit des raccords du type de ceux utilisés sur les tuyaux "basse pression", tout en fournissant de meilleurs résultats de tenue en pression soit des raccords du type de ceux utilisés pour les tuyaux "haute pression" et d'une aussi bonne résistance mais d'un plus faible coût en raison d'une plus petite utilisation de matière due au plus faible dimensionnement.

## Revendications

1.  Tuyau composite souple pour le transport de fluide sous pression comprenant un tube intérieur en un élastomère vulcanisable ou thermoplastique et au moins une couche d'armature en fibres textiles synthétiques du type aramide avec un revêtement protecteur externe, caractérisé en ce que ladite armature est une tresse (12, 15), ou l'équivalent d'une tresse sous une forme de deux nappes guipées, réalisée en un fil d'une ténacité comprise entre 2400 et 3000 N/mm² et qui représente entre 3 et 20% de l'épaisseur totale du tuyau lequel présente une pression limite de non éclatement (PLNE) d'au moins 50 MPa pour un diametre nominal de 6,4 mm et de 20 MPa pour un diamètre nominal de 25 mm.

2.  Tuyau composite selon la revendication 1, caractérisé en ce que l'adhérence de la couche d'armature par rapport au revêtement extérieur et au tube est d'au moins 25 N/cm.

3.  Tuyau composite selon l'une quelconque des revendications précédentes, caractérisé en ce que le tube (11, 14) est fabriqué a partir d'un élastomère du type caoutchouc nitrile (NBR) ou polychloprène (CR).

4.  Tuyau composite selon l'une quelconque des revendications précédentes, caractérisé en ce que le revêtement (13, 16) est en un élastomère du type des polychloroprènes (CR) ou EPDM.

5.  Tuyau composite selon la revendication 1, caractérisé en ce qu'il comprend sur la tresse (15) (ou son équivalent) en fibres aramide un enroulement hélicoïdal en un fil (I7), de préférence métallique.

6.  Tuyau composite selon la revendication 5, caractérisé en ce qu'entre le fil (17) et le revêtement externe (16) est interposé un entreplis (I8) formé d'une mince ou très mince couche de fibres textiles.

## Claims

1.  Flexible composite pipe for transporting pressurized fluids comprising an internal tube made from a vulcanizable or thermoplastic elastomer and at least one reinforcement layer made from synthetic textile fibres of the aramide type with an external protective coating, characterized in that said reinforcement is a braid (12, 15), or the equivalent of a braid in the form of two braided layers, formed from a thread having a tenacity between 2400 and 3000 N/mm² and which represents between 3 and 20% of the total thickness of the pipe which has a a maximum admissible non burst pressure (PLNE) of at least 50 MPa for a nominal diameter of 6.4 mm and 20 MPa for a nominal diameter of 25 mm.

2.  Composite pipe according to claim 1, characterized in that the adhesion of the reinforcement layer with respect to the outer layer of the tube is at least 25 N/cm.

3.  Composite pipe according to any one of the preceding claims, characterized in that the tube (11, 14) is made from an elastomer of the nitrile rubber (NBR) of polychloroprene rubber (CR) type.

4.  Composite pipe according to any one of the preceding claims, characterized in that the coating (13, 16) is made from an elastomer of the polychloroprene (CR) type or EPDM.

5.  Composite pipe according to claim 1, characterized in that it comprises on the braid (15) (or its equivalent) made from aramide fibres, a helical winding of a thread (17) preferably metallic.

6.  Composite pipe according to claim 5, characterized in that between the thread (17) and the external coating (16) is interposed an interply (18) formed of a thin or very thin textile fibre layer.

## Ansprüche

1. Flexibler Verbundschlauch für den Transport von Fluid unter Druck, umfassend einen mittigen Schlauch aus einem vulkanisierbarem oder thermoplastischem Elastomer und wenig-stens eine Armierungsschicht aus syntheti-schen Textilfasern mit einem äußeren Schutz-überzug, dadurch **gekennzeichnet**, daß die Armierung eine Beflechtung (12, 15) aus Fasern des Typs Aramid, oder das Äquivalent einer Beflechtung in der Form von zwei umsponnenen Mänteln ist, die aus einem Faden mit einer Reißfestigkeit, welche zwischen 2400 und 3000 N/mm² liegt, verwirklicht ist, zwischen 3 und 20% der Gesamtdicke des Schlauchs bildet, welcher einen beschränkten Druck des Nichtplatzens (PLNE) von wenigstens 50 MPa für einen Nenndurchmesser von 6,4 mm und von 20 MPa für einen Nenndurchmesser von 24 mm aufweist.

2. Verbundschlauch nach Anspruch 1, dadurch **gekennzeichnet,** daß das Haftvermögen der Armierungsschicht mit Bezug auf den äußeren Überzug und auf den Schlauch wenigstens 25 N/cm beträgt.

3. Verbundschlauch nach irgendeinem der vor-hergehenden Ansprüche, dadurch **gekenn-zeichnet,** daß der Schlauch (11,14) von einem Elastomer des Typs Nitrilkautschuk (NBR) oder Polychloropren (CR) hergestellt ist.

4. Verbundschlauch nach irgendeinem der vor-hergehenden Ansprüche, dadurch **gekenn-zeichnet,** daß die Umhüllung (13,16) aus einem Elastomer des Typs der Polychloroprene (CR) oder EPDM ist.

5. Verbundschlauch nach Anspruch 1, dadurch **gekennzeichnet,** daß er auf der Beflechtung (15) (oder ihrem Äquivalent) aus Aramidfasern eine spiralförmige Bewicklung aus einem, vorzugsweise metallischen, Faden (17) umfaßt.

6. Verbundschlauch nach Anspruch 5, dadurch **gekennzeichnet,** daß zwischen den Faden (17) und die äußere Umhüllung (16) eine Einlage (18), die von einer dünnen oder sehr dünnen Schicht aus Textilfasern gebildet ist, ein-gefügt ist.

# FIG.1

10

2

13

11

12

2

2

# FIG.2

11   12   13

# FIG.3

15

16

14

17   18   20

EP 0 267 818 B1